Europäisches Patentamt

European Patent Office

Office européen des brevets

(11) Veröffentlichungsnummer: **0 152 558**
A2

(12) **EUROPÄISCHE PATENTANMELDUNG**

(21) Anmeldenummer: 84114498.3

(22) Anmeldetag: 29.11.84

(51) Int. Cl.⁴: **C 09 D 5/00**, C 09 D 9/00

(30) Priorität: 26.01.84 DE 3402534

(43) Veröffentlichungstag der Anmeldung: 28.08.85
Patentblatt 85/35

(84) Benannte Vertragsstaaten: **AT BE CH FR GB IT LI LU NL SE**

(71) Anmelder: Döbbelin & Boeder GmbH, Wickerer Strasse 50, D-6093 Flörsheim am Main (DE)

(72) Erfinder: Boeder, Lutz, Amselweg 18, D-6740 Königstein 2 (DE)
Erfinder: Bernsau, Fritz, Im Urbruch 7, D-6074 Rödermark-Urberach (DE)

(74) Vertreter: Beil, Hans Christoph, Dr. et al, Beil, Wolff und Beil Rechtsanwälte Adelonstrasse 58, D-6230 Frankfurt am Main 80 (DE)

(54) **Korrekturflüssigkeit insbesondere für selbstdurchschreibende Papiere.**

(57) Korrekturflüssigkeit, insbesondere für selbstdurchschreibende Papiere, bestehend aus einem Dispersionsmittel, Pigmenten oder Füllstoffen, Bindemittel und gegebenenfalls bekannten Herstellungshilfsmitteln, die außerdem einen in einer Mikrokapsel eingeschlossenen Farbgeber und einen Farbnehmer enthält. Das Dispergiermittel, das auch eine Mischung mehrerer einzelner Mittel sein kann, muß so ausgewählt sein, daß die Wand der Mikrokapseln nicht angegriffen wird.

EP 0 152 558 A2

Unsere Nr. 24 267

Döbbelin & Boeder GmbH
D-6093 Flörsheim/Main

<u>KORREKTURFLÜSSIGKEIT, INSBESONDERE FÜR</u>
<u>SELBSTDURCHSCHREIBENDE PAPIERE</u>

Die vorliegende Erfindung betrifft eine Korrekturflüssigkeit, insbesondere für selbstdurchschreibende
Papiere.

Korrekturflüssigkeiten sind im allgemeinen Dispersionen,
die geeignet sind, auf Papier oder anderen Substraten
den mit Maschine oder von Hand beschriebenen Untergrund
durch Überstreichen abzudecken. Nach dem Verdunsten
des Dispersionsmittels ist die abgedeckte Oberfläche
für eine neue, korrigierte Beschriftung aufnahmefähig.
Bekannt sind Flüssigkeiten dieser Art für normale
Schreibpapiere, und zwar sowohl für Originale wie für
mit Kohlepapier angefertigte Durchschläge. Es ist ferner bekannt, diese Korrekturflüssigkeiten anzufärben, um sie Papieren oder anderen Substraten farblich anzupassen.

Seit einer Reihe von Jahren werden zur Anfertigung von Kopien eines Originals in zunehmendem Umfang sogenannte selbstdurchschreibende oder chemische Durchschlagpapiere benutzt, bei denen durch Druck beim Beschriften die einen Farbgeber enthaltenden Mikrokapseln aufbrechen und daraufhin eine Reaktion dieses Farbgebers mit einem Farbnehmer oder Farbentwickler einsetzt (vgl. u.a. A. v. Raven und K. Fenderl, Hochoberflächige Pigmente für die Herstellung von chemischen Durchschreibepapieren, Wochenblatt für Papierfabrikation 1980, 607 f.; M.E. Rohmann und H. Schoepke, Bindemittelsysteme für chemische Durchschreibepapiere, Wochenblatt für Papierfabrikation 1982, 767 f.).

Die Anwendung der bekannten Korrekturflüssigkeiten bei solchen Selbstdurchschreibepapieren scheitert daran, dass es zwar gelingt, die fehlerhaften Stellen abzudecken, jedoch eine kopierende Wiederbeschriftung prinzipiell nicht möglich ist, da an den zu korrigierenden Stellen Farbgeber und/oder -nehmer fehlen bzw. abgedeckt und/oder verbraucht sind. In der Praxis werden solche Korrekturen deshalb entweder durch mehrfaches originales Schreiben (auch auf den Kopien) oder durch entsprechendes Einlegen von Kohlepapier bewerkstelligt.

Diese Nachteile beseitigt die erfindungsgemäss Korrekturflüssigkeit, die neben den herkömmlichen Bestandteilen zusätzlich einen Farbgeber und einen Farbnehmer (Farbentwickler) enthält, wobei die den Farbgeber enthaltende Mikrokapsel von dem Dispersionsmittel
nicht angegriffen werden darf.

Ferner muss an die erfindungsgemässe Korrekturflüssigkeit die Forderung gestellt werden, dass auch jede
andere nachteilige physikalische und/oder chemische
wechselseitige Beeinflussung der einzelnen Komponenten
unterbleibt. Für die Herstellung der erfindungsgemässen
Korrekturflüssigkeit sind deshalb beim Einsatz der
nachstehend genannten Komponenten spezifische Auswahlregeln erforderlich. So darf beispielsweise die Kapselwand, wie erwähnt, nicht vom Dispersionsmittel angegriffen werden, das Bindemittel muss in dem gewählten
Dispersionsmittel löslich sein oder molekular dispers
vorliegen und die für die Farbentwicklungsfunktion
erforderlichen sauren Zentren des Farbnehmers dürfen
durch andere Bestandteile der Korrekturflüssigkeit
nicht desaktiviert werden.

Eine erfindungsgemässe Korrekturflüssigkeit besteht aus
        (a) Dispersionsmittel
        (b) Pigment oder Füllstoff
        (c) Bindemittel
        (d) verkapselter Farbgeber
        (e) Farbentwickler (Farbnehmer)
        (f) gegebenenfalls Hilfsstoffen.

Als Dispersionsmittel (a) werden vorzugsweise organische
Lösungsmittel eingesetzt, die durch einen vergleichsweise niedrigen Siedepunkt und eine niedrige Verdampfungsenthalpie ausgezeichnet sind, damit die aufgetragene Korrekturflüssigkeit möglichst rasch trocknet.

Verwendet werden halogenierte Kohlenwasserstoffe, wie etwa Dichlormethan, Trichlorethan, Trichlortrifluorethan, Alkylester, wie etwa Ethylacetat und Methylpropionat, Alkanole, wie Methanol und Ethanol, Alkane oder Cycloalkane, wie Cyclohexan oder deren Gemische sowie Benzol und dessen Homologe.

Als Pigment oder Füllstoff (b) dienen vorzugsweise Titandioxide, Zinksulfid, Blanc fix, Aluminiumoxide oder silikatische Mineralstoffe.

Bindemittel (c) sind notwendig, um nach dem Verdunsten des Dispersionsmittels die Haftung und Kohäsion des verbleibenden Rückstands auf dem Substrat zu gewährleisten. Eingesetzt werden vorzugsweise Nitrocellulose (Kollodiumwolle), Methylcellulose, (Co-)Polyesterharze, natürliche und synthetische Wachse sowie die auf dem Markt üblichen Bindemittel für Papierbeschichtung, soweit sie in dem verwendeten Dispersionsmittel löslich oder hinreichend dispergierbar sind.

Der verkapselte Farbgeber (d) ist in gelöster Form in Mikrokapseln in Form von Hohlkugeln mit einem Durchmesser von ca. 2 bis 10 um enthalten. Die Wand dieser Kapseln besteht aus Melaminharz, Polyharnstoff, Polyurethan, Harnstoff-Formaldehyd-Kondensate, Ethylen-Maleinsäureanhydrid-Copolymerisat, Gelatine, Aluminium-Carboxymethylcellulose oder dergleichen. Solche Farbgeber-Mikrokapseln sind handelsüblich als wässrige Dispersionen erhältlich. Vor dem Einsatz in der erfindungsgemäßen Korrekturflüssigkeit werden die Kapseln vorzugsweise getrocknet.

Als Farbentwickler oder -nehmer (e) werden die dem Fachmann bekannten klassischen Komponenten verwendet.

wie Phenolharze oder Zn-dotierte Phenolharze zusammen mit inerten Füllstoffen, wie Kaolin oder China Clay, oder die dafür am weitesten verbreiteten anorganischen sauer aktivierten Naturtone, wie beispielsweise Montmorillonit, Attapulgit, Hectorit, Illit oder Betonit mit hoher spezifischer Oberfläche oder hochdisperse Aluminium- oder Siliziumoxide sowie Mischungen daraus.

Zu den gegebenenfalls einzusetzenden Hilfsstoffen (f) gehören Dispergiermittel, beispielsweise solche auf der Basis oxalkylierter Phenole oder fettsaure Metallsalze, Entschäumer, wie beispielsweise Trialkyl/arylphosphate, sowie mit dem Dispersionsmittel verträgliche Farbpigmente zum Anfärben der Korrekturflüssigkeit, falls dies gewünscht wird.

Die Zusammensetzung erfindungsgemässer Korrekturflüssigkeiten und die Art ihrer Herstellung wird in den folgenden Beispielen näher beschrieben.

Beispiel 1

In einem Gemisch von 130 ml Methanol und 30 ml Ethylacetat werden 30 g Nitrocellulose-Chips (Handelsbezeichnung Enceweiss CO32) unter Rühren vollkommen gelöst. Anschliessend werden 10 g Zinkstearat und 5 g Titandioxid sowie 20 g eines chemisch modifizierten Aluminiumschicht-Silikates zugesetzt und hochgradig dispergiert.

60 g einer handelsüblichen 40%igen wässrigen Dispersion von Farbgeber-Mikrokapseln, deren Wandmaterial aus einem Melaminharz besteht, werden im Sprühtrockenverfahren entwässert und der gewonnene Rückstand an trockenen Kapseln der oben vorgefertigten Dispersion langsam unter Rühren zugefügt.

Nach 3-minütigem Rühren im Ultraschallfeld entsteht eine glatte, streichfähige Masse, die auf Papier aufgebracht, nach dem Verdunsten des Dispersionsmittels eine festhaftende, deckende weisse Schicht bildet, die bei Druckbeanspruchung sich verfärbt.

Das vorgelegte Lösungsmittelgemisch aus Methanol und Ethylacetat kann im Mischungsverhältnis im weiten Umfang variiert werden oder durch Homologe ersetzt werden. Die beschrieben Mischung stellt einen guten Kompromiss zwischen Löslichkeit und Verdunstungsgeschwindigkeit dar.

Das verwendete weisse Nitrocellulosematerial kann jederzeit durch farbige Typen ersetzt werden, wodurch gefärbte Korrekturflüssigkeiten entstehen.

Beispiel 2

Nach dem in Beispiel 1 beschriebenen Herstellungsprinzip wird eine Dispersion folgender Zusammensetzung hergestellt:

240 g 1.1.1-Trichlorethan

 25 g Trichlorethylen

 10 g Copolyesterharz (LE 23-NR3 der Firma Bostik GmbH, Oberursel)

  3 g alkoxyliertes Nonylphenol

 15 g Titandioxid

 30 g Al-Silikat

 28 g entwässerte Farbgeber-Mikrokapseln (Wandmaterial: Harnstoff-Formaldehyd-Kondensat)

Die fertige, fein dispergierte Flüssigkeit zeigt das gleiche Verhalten wie in Beispiel 1 beschrieben.

Gefärbte Flüssigkeiten erhält man durch Auflösen von 0,3 bis 0,5 g Reaktivfarbstoffen im Dispersionsmittel.

Das vorgelegte Lösungsmittelgemisch kann durch andere chlorierte und/oder fluorierte Kohlenwasserstoffe ersetzt werden.

Beispiel 3

Nach dem gleichen Verfahrensprinzip wie in Beispiel 1 beschrieben wird eine Dispersion folgender Zusammensetzung hergestellt:

180 g Cyclohexan
  8 g Montanwachs
 10 g Zinkstearat
 15 g Titandioxid
 30 g Al-Silikat
 25 g entwässerte Farbgeber-Mikrokapseln (Wandmaterial: Polyharnstoff/Polyurethan)

Die fertige Korrekturflüssigkeit zeigt die in Beispiel 1 angegebenen Eigenschaften. Sie kann durch im Dispersionsmittel gelöste Farbstoffe eingefärbt werden.

Das Dispersionsmittel kann durch andere aliphatische Kohlenwasserstoffe und deren Gemisch ersetzt werden.

Obwohl die Verwendung der erfindungsgemässen Korrekturflüssigkeiten im vorstehenden im wesentlichen im Bezug

0152558

auf selbstdurchschreibende Papiere beschrieben ist, können diese Flüssigkeit selbstverständlich auch an Stelle der bekannten Korrekturflüssigkeiten verwendet werden. In der praktischen Anwendung ergibt sich daraus der Vorteil, dass für unterschiedliche Papierarten nicht verschiedene Korrekturflüssigkeiten benutzt werden müssen.

Patentansprüche:

1. Korrekturflüssigkeit, insbesondere für selbstdurchschreibende Papiere, bestehend aus einem Dispersionsmittel, Pigmenten oder Füllstoffen, Bindemittel und gegebenenfalls bekannten Herstellungshilfsmitteln, d a d u r c h   g e k e n n z e i c h n e t , dass sie gleichzeitig einen Farbgeber und einen Farbnehmer enthält   und die Dispersionsflüssigkeit die den Farbgeber enthaltenden Mikrokapseln nicht angreift.

2. Koorekturflüssigkeit nach Anspruch 1, d a d u r c h   g e k e n n z e i c h n e t , dass der Farbgeber in Form von trockenen Mikrokapseln eindispergiert worden ist.

3. Korrekturflüssigkeit nach Anspruch 1 und 2, d a - d u r c h   g e k e n n z e i c h n e t , dass als Dispersionsmittel ein Gemisch aus Alkanolen und Estern verwendet wird und das Wandmaterial der Mikrokapseln aus einem Melaminharz besteht.

4. Korrekturflüssigkeit nach Anspruch 3, d a d u r c h   g e k e n n z e i c h n e t , dass als Dispersionsmittel ein Gemisch aus Methanol und Ethylacetat verwendet wird.

5. Korrekturflüssigkeit nach Anspruch 1 und 2, d a - d u r c h   g e k e n n z e i c h n e t , dass als Dispersionsmittel halogenierte Kohlenwasserstoffe verwendet werden und das Wandmaterial der Mikrokapseln aus einem Harnstoff-Formaldehyd-Kondensat besteht.

0152558

6. Korrekturflüssigkeit nach Anspruch 5, d a d u r c h
g e k e n n z e i c h n e t , dass als Dispersionsmittel ein Gemisch aus Trichlorethan und Trichlorethylen verwendet wird.

7. Korrekturflüssigkeit nach Anspruch 1 und 2, d a -
d u r c h g e k e n n z e i c h n e t , dass als
Dispersionsmittel aliphatische Kohlenwasserstoffe
verwendet werden und das Wandmaterial der Mikrokapseln aus einem Polyharnstoff-Polyurethan-Gemisch
besteht.

8. Korrekturflüssigkeit nach Anspruch 7, d a d u r c h
g e k e n n z e i c h n e t , dass als Dispersionsmittel Cyclohexan verwendet wird.